# EUROPÄISCHE PATENTSCHRIFT

(11) **EP 2 634 965 B1**
(45) Veröffentlichungstag und Bekanntmachung des Hinweises auf die Patenterteilung: **12.03.2014**
(21) Anmeldenummer: 13000587.9
(22) Anmeldetag: 06.02.2013
(51) Int. Cl.: H04L 12/24, H04L 29/06, H04M 11/02, H04L 12/40, H04L 12/28, H04L 29/12

(54) **Systemkomponenten-Einbindung bei einem Haus-Kommunikationssystem**
Integration of system components in a domestic communication system
Liaison de composants système pour un système de communication interne

(30) Priorität: 28.02.2012 DE 102012003988
(43) Veröffentlichungstag der Anmeldung: 04.09.2013
(73) Patentinhaber: ABB AG, 68309 Mannheim (DE)
(72) Erfinder: Platte, Jörg, 44149 Dortmund (DE)

(56) Entgegenhaltungen:
- EP-A1- 2 222 069
- US-A1- 2002 126 000
- US-A1- 2009 092 236

## Beschreibung

Die Erfindung bezieht sich auf eine Systemkomponenten-Einbindung bei einem Haus-Kommunikationssystem mit mindestens einer Türstation, mindestens einer Wohnungsstation, mindestens einem Türöffner / Schaltaktor und optional einer Systemzentrale als Systemkomponenten, wobei alle Systemkomponenten an einen Bus angeschlossen sind und eine Verknüpfung / Adressierung der Systemkomponenten des Haus-Kommunikationssystems mittels Kodierschalter erfolgt.

Bei der Inbetriebnahmen eines Bus-basierten Haus-Kommunikationssystems muss in der Regel nicht nur eine logische Verknüpfung / Adressierung zwischen einem Klingelknopf an der Türstation und der zugehörigen Wohnungsstation hergestellt werden, sondern ebenfalls der oder die Türöffner / Schaltaktoren mit sämtlichen Wohnungsstationen verknüpft werden. Dies hat neben der reinen Auswahl der Systemkomponenten respektive Module einen Sicherheitsaspekt, da es nicht möglich sein sollte, über eine neue an den Bus angeschlossene Wohnungsstation (Innenstation), z. B. durch Austausch der Türstation mit einer Wohnungsstation, eine Tür zu öffnen bzw. einen Schaltaktor zu betätigen.

Der Erfindung liegt die Aufgabe zugrunde, eine optimierte Systemkomponenten-Einbindung bei einem Haus-Kommunikationssystem anzugeben.

Diese Aufgabe wird in Verbindung mit den Merkmalen des Oberbegriffes des Anspruchs 1 erfindungsgemäß dadurch gelöst, dass eine Kennzeichnung aller Systemkomponenten des Haus-Kommunikationssystems mit einem speziellen Schlüsselcode erfolgt, welcher von einer Systemkomponente mittels einer Steuer-/Verarbeitungseinheit generierbar und in einem Speicher abspeicherbar sowie an die weiteren Systemkomponenten weiterleitbar und dort ebenfalls in Speichern abspeicherbar ist.

Die mit der Erfindung erzielbaren Vorteile bestehen gegenüber herkömmlichen Verfahren zur Konfiguration busbasierter Hauskommunikationsanlagen und zur eindeutigen Zuordnung von deren Systemkomponenten mittels akustischer und/oder visueller Identifikationsmerkmale, wie sie beispielsweise in der Patentanmeldung EP 2 222 069 A1 beschrieben sind, insbesondere darin, dass durch die Erfindung in zuverlässiger Weise gewährleistet ist, dass es mittels einer nach abgeschlossener Inbetriebnahme neu an das Haus-Kommunikationssystem angeschlossenen Systemkomponente nicht möglich ist, den Türöffner / Schaltaktor zu betätigen oder andere den Sicherheitsaspekt tangierende Aktionen durchzuführen.

Vorteilhafte Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: ein Haus-Kommunikationssystem gemäß einer ersten Ausführungsform,
- Fig. 2: ein Haus-Kommunikationssystem gemäß einer zweiten Ausführungsform,
- Fig. 3: ein Haus-Kommunikationssystem mit zusätzlichen Sensoren und Aktoren.

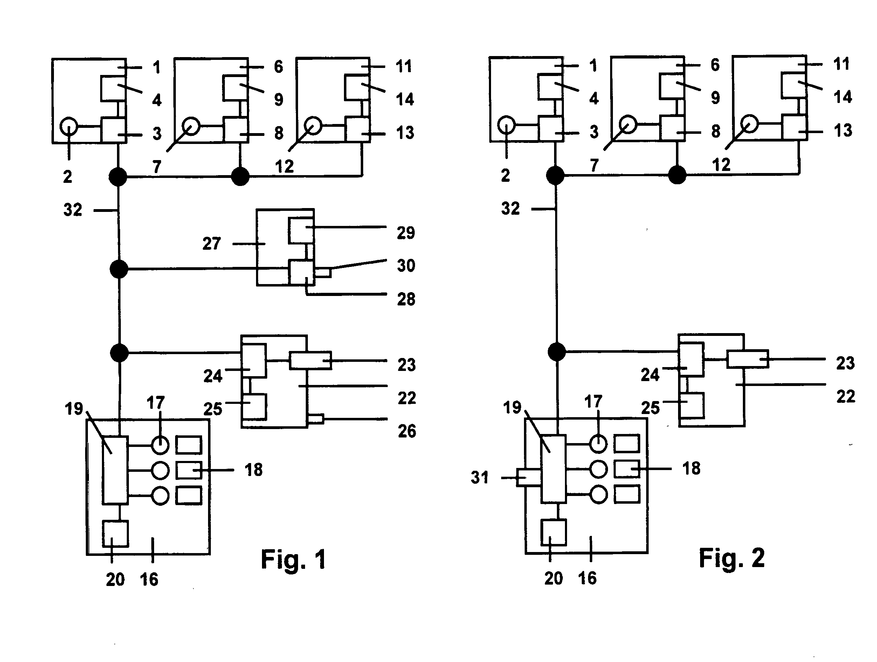

In Fig. 1 ist ein Haus-Kommunikationssystem gemäß einer ersten Ausführungsform dargestellt. Das Haus-Kommunikationssystem weist sechs an einen Bus 32 angeschlossene Systemkomponenten auf, nämlich drei Wohnungsstationen 1, 6, 11, eine Türstation 16, eine Systemzentrale 27 und einen Türöffner / Schaltaktor 22, wobei die Systemzentrale 27 und der Türöffner / Schaltaktor 22 auch in einem Gerät kombiniert werden können.

Die Wohnungsstationen 1, 6, 11 besitzen unter Anderem jeweils einen Türöffnungsknopf 2, 7, 12 zur Betätigung des Türöffners / Schaltaktors 22, eine Steuer-/Verarbeitungseinheit 3, 8, 13 und einen Speicher 4, 9, 14. Selbstverständlich können die Wohnungsstationen 1, 6, 11 jeweils mit Mikrofon, Lautsprecher und Anzeigeeinheit (Display) ausgerüstet sein, dies ist jedoch für die nachstehenden Betrachtungen von untergeordneter Bedeutung.

Die Türstation 16 besitzt unter Anderem mehrere Klingelknöpfe 17 zur Anwahl der einzelnen Wohnungsstationen 1, 6, 11, den einzelnen Klingelknöpfen 17 zugeordnete Namensschilder 18, eine Steuer-/Verarbeitungseinheit 19 und einen Speicher 20. Selbstverständlich kann die Türstation 16 mit Mikrofon, Lautsprecher und Kamera ausgerüstet sein, dies ist jedoch für die nachstehenden Betrachtungen von untergeordneter Bedeutung.

Die Systemzentrale 27 besitzt unter Anderem eine Steuer-/Verarbeitungseinheit 28, einen (optionalen) Programmierknopf 30 und einen Speicher 29. Die Systemzentrale 27 dient insbesondere auch zur Energieversorgung des Haus-Kommunikationssystems und weist hierzu vorzugsweise ein am 230V-Netz angeschlossenes Netzgerät auf. Durch einen Schalter (Netzschalter) der Systemzentrale 27 oder über die Hausverteilung kann das Haus-Kommunikationssystem eingeschaltet / ausgeschaltet werden.

Der Türöffner / Schaltaktor 22 besitzt unter anderem einen Aktor 23 für die Betätigung einer Tür-Schließeinheit, eine Steuer-/Verarbeitungseinheit 24, einen optionalen Taster oder Schalter 26 und einen Speicher 25.

Dieses Haus-Kommunikationssystem kommt bei der Inbetriebnahme ohne einen dedizierten Programmiermodus aus, da jede Wohnungsstation direkt über Kodierschalter adressiert wird. Dies hat folgende Vorteile:
- Nach erfolgter Installation müssen nicht alle Wohnungsstationen vom Installateur "abgelaufen" (das heißt körperlich aufgesucht) werden, um die Verknüpfung herzustellen.
- Tritt ein Fehler bei der Programmierung auf, erhält der Installateur eine Rückmeldung über die mögliche Fehlerursache.
- Bei nachträglichem Austausch einer Systemkomponente muss die Programmierung / Inbetriebnahme nicht erneut erfolgen.

Wesentliches Ziel der vorgeschlagenen Erfindung ist es, basierend auf einem System einer Verknüpfung / Adressierung der Systemkomponenten des Haus-Kommunikationssystems mittels Kodierschalter eine vollautomatische und sichere Einbindung insbesondere auch der Türöffner / Schaltaktoren zu gewährleisten.

Zum Erreichen dieses Ziels erfolgt eine automatische "Paarung" aller zum Installationszeitpunkt an den Bus angeschlossenen Systemkomponenten, war zur Folge hat, dass später hinzugefügte Systemkomponenten (Geräte) keine sicherheitskritischen Aufgaben - wie dies die Aktivierung des Türöffners 22 / Schaltaktors darstellt - ausführen können. Hierzu wird ein Schlüsselcode s von einer Systemkomponente des Haus-Kommunikationssystems generiert und an alle Systemkomponenten gesandt.

Beim Ausführungsbeispiel gemäß Fig. 1 wird der Schlüsselcode s von der Systemzentrale 27 mittels der Steuer-/Verarbeitungseinheit 24 generiert, im Speicher 29 abgespeichert, nach dem Start des Haus-Kommunikationssystems an alle an den Bus 32 angeschlossene Systemkomponenten 1, 6, 11, 16, 22 übertragen und dort mittels der Steuer-/Verarbeitungseinheit 3, 8, 13, 19, 24 empfangen und im zugeordneten Speicher 4, 9, 14, 20, 24 abgespeichert. Zur Erhöhung der Sicherheit kann der Türöffner 22 mit einem Schalter oder Taster 26 ausgestattet werden, über den bei bereits gespeichertem s eine erneute Übernahme eines neuen Schlüssels aktiviert werden kann. Dies verhindert Angriffe, bei denen eine zusätzliche Systemzentrale 27 an den Bus angeschlossen wird, um ein neues s zu übertragen.

Alle sicherheitskritischen Aktionen setzen nunmehr die Kenntnis dieses Schlüsselcodes s voraus. Dieser kann dann beispielsweise mit einer gewünschten Aktion verknüpft werden. Später an den Bus 32 angeschlossene Systemkomponenten ist der Schlüsselcode s unbekannt und folglich können durch diese Systemkomponenten auch keine sicherheitskritischen Aktionen ausgeführt werden. Für die Verknüpfung des Schlüsselcodes s mit der Aktion gibt es mehrere Möglichkeiten:
- Erweiterung der Aktion durch s. Dies ist sicher, sofern kein geeignetes Lesegerät für die Buskommunikation vorhanden ist.
- Verwendung kryptographischer Methoden zur Verschleierung von s. Hier könnte beispielhaft das Challenge-Response-Verfahren genutzt werden. Dazu sendet eine an den Bus angeschlossene Systemkomponente 1 oder 6 oder 11 zunächst eine Nachricht an den Türöffner 22, die von diesem mit einer Zufallszahl r beantwortet wird. Diese wird dann mittels einer Verschlüsselungsoperation f verschlüsselt und das Ergebnis fₛ(r) an den Türöffner / Schaltaktor gesendet. Der Vorteil dieser Methode liegt darin, dass s nicht für die sicherheitskritischen Aktionen übertragen werden muss.

In Fig. 2 ist ein Haus-Kommunikationssystem gemäß einer zweiten Ausführungsform dargestellt. Im Unterschied zur ersten Ausführungsform gemäß Figur 1 fehlt hier die Systemzentrale 27, so dass deren Funktion beispielsweise durch die Türstation 16 übernommen wird. Insbesondere weist die Türstation 16 in diesem Fall einen Schalter auf, mit welchem das Haus-Kommunikationssystem eingeschaltet / ausgeschaltet werden kann. Darüber ist die Steuer-/Verarbeitungseinheit 19 der Türstation 16 mit einem Programmierknopf 31 versehen. Die weitere Ausgestaltung ist wie unter Figur 1 beschrieben.

Beim Anschluss einer neuen Systemkomponente ist eine erneute Übertragung des Schlüsselcodes s notwendig. S kann ggf. neu berechnet werden. Dies kann auf mehrere Arten durchgeführt werden:
1. Ein Programmierknopf wird an der Systemkomponente, die den Schlüsselcode s generiert / berechnet hat, gedrückt, so dass diese den Schlüsselcode s Steuer- / Verarbeitungseinheit an alle Systemkomponenten (Geräte) überträgt.
2. Das Haus-Kommunikationssystem wird durch Ab- und Zuschalten der Versorgungsspannung, insbesondere Netzspannung, neu gestartet.

Beim Ausführungsbeispiel gemäß Fig. 1 wird unter Bezugnahme auf die vorstehende Ziffer 1 der Programmierknopf 30 der Steuer-/Verarbeitungseinheit 28 der Systemzentrale 27 gedrückt, worauf die Steuer-/Verarbeitungseinheit 28 den neuen Schlüsselcode s generiert, im Speicher 29 abspeichert und an alle Systemkomponenten des Haus-Kommunikationssystems absendet. Alle an den Bus 32 angeschlossenen Systemkomponenten (Geräte) speichern den neuen Schlüsselcode s dann in ihrem internen Speicher ab.

Beim Ausführungsbeispiel gemäß Fig. 2 wird unter Bezugnahme auf die vorstehende Ziffer 1 der Programmierknopf 31 der Steuer-/Verarbeitungseinheit 19 der Türstation 16 gedrückt, worauf die Steuer-/Verarbeitungseinheit 19 den neuen Schlüsselcode s generiert, im Speicher 20 abspeichert und an alle Systemkomponenten des Haus-Kommunikationssystems absendet. Alle an den Bus 32 angeschlossenen Systemkomponenten (Geräte) speichern den neuen Schlüsselcode s dann in ihrem internen Speicher ab.

Alternativ hierzu wird unter Bezugnahme auf die vorstehende Ziffer 2 beim Ausführungsbeispiel gemäß Fig. 1 der Netzschalter der Systemzentrale 27 ausgeschaltet und anschließend wieder eingeschaltet, worauf die Steuer-/Verarbeitungseinheit 28 den neuen Schlüsselcode s generiert, im Speicher 29 abspeichert und an alle Systemkomponenten des Haus-Kommunikationssystems absendet. Alle an den Bus 32 angeschlossenen Systemkomponenten (Geräte) speichern den neuen Schlüsselcode s dann in ihrem internen Speicher ab.

Alternativ hierzu wird unter Bezugnahme auf die vorstehende Ziffer 2 beim Ausführungsbeispiel gemäß Fig. 2 der Schalter der Türstation 16 ausgeschaltet und anschließend wieder eingeschaltet, worauf die Steuer-/Verarbeitungseinheit 19 den neuen Schlüsselcode s generiert, im Speicher 20 abspeichert und an alle Systemkomponenten des Haus-Kommunikationssystems absendet. Alle an den Bus 32 angeschlossenen Systemkomponenten (Geräte) speichern den neuen Schlüsselcode s dann in ihrem internen Speicher ab.

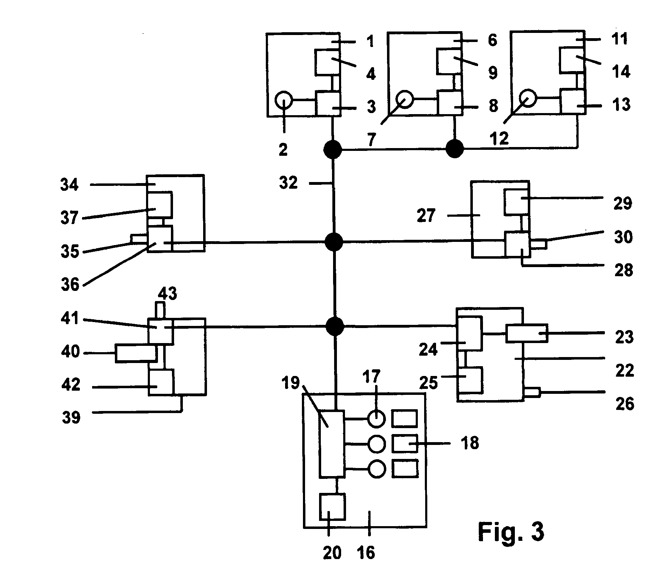

In Fig. 3 ist ein Haus-Kommunikationssystem mit zusätzlichen Aktoren und Sensoren dargestellt. Im Unterschied zur ersten Ausführungsform gemäß Figur 1 sind hier ein zusätzlicher Tastsensor 34 und ein zusätzlicher Schaltaktor 39 hinzugefügt. Tastsensor 34 und Schaltaktor 39 weisen eine Steuer-/Verarbeitungseinheit 36 respektive 41 sowie einen Speicher 37 respektive 42 auf. Der Tastsensor 34 weist zusätzlich einen Taster 35 auf, welcher die Steuer-/Verarbeitungseinheit 36 beaufschlagt, während der Schaltaktor 39 einen entsprechenden Aktor 40 sowie einen Taster 43 aufweist, welcher die Steuer-Nerarbeitungseinheit 41 beaufschlagt. Tastsensor 34 und Schaltaktor 39 können eindeutig im System adressiert werden.

In dieser Ausführung sollen Schaltaktor 39 und Tastsensor 34 sicher miteinander gekoppelt werden, so dass der Aktor 40 nur durch Betätigung von Taster 35 geschaltet werden kann. Das hier zur Anwendung kommende Verfahren ist ähnlich dem oben beschriebenen. Die Steuer-/Verarbeitungseinheit 41 sendet dazu nach Betätigung von Taster 43 oder nach der ersten Inbetriebnahme oder nach Änderung der Adressierungsinformation einen eigens generierten Schlüsselcode s1, der von allen am Bus angeschlossenen Tastsensoren 34 mit derselben Adresse im internen Speicher abgelegt wird. S1 wird dann, wie oben beschrieben, mit sicherheitskritischen Kommandos gesendet. Da jeder Schaltaktor 39 sein eigenes s1 berechnet, können nur die so gepaarten Tastsensoren 34 die jeweiligen Schaltaktoren 39 steuern.

Alle Alternativen haben den Vorteil, dass es möglich ist, die Systemkomponenten ohne Verlust der Schlüsselcodes s / s1 auch kurz vom Bus 32 zu entfernen.

### Bezugszeichenliste

- 1: Wohnungsstation
- 2: Türöffnungsknopf
- 3: Steuer-/Verarbeitungseinheit
- 4: Speicher
- 5: -
- 6: Wohnungsstation
- 7: Türöffnungsknopf
- 8: Steuer-/Verarbeitungseinheit
- 9: Speicher
- 10: -
- 11: Wohnungsstation
- 12: Türöffnungsknopf
- 13: Steuer-/Verarbeitungseinheit
- 14: Speicher
- 15: -
- 16: Türstation
- 17: Klingelknöpfe
- 18: Namensschilder
- 19: Steuer-/Verarbeitungseinheit
- 20: Speicher
- 21: -
- 22: Türöffner / Schaltaktor
- 23: Aktor
- 24: Steuer-/Verarbeitungseinheit
- 25: Speicher
- 26: Taster
- 27: Systemzentrale
- 28: Steuer-/Verarbeitungseinheit
- 29: Speicher
- 30: Programmierknopf
- 31: Programmierknopf
- 32: Bus

- 34: Tastsensor
- 35: Taster
- 36: Steuer-/Verarbeitungseinheit
- 37: Speicher
- 38: -
- 39: Schaltaktor
- 40: Aktor
- 41: Steuer-/Verarbeitungseinheit
- 42: Speicher
- 43: Taster

## Patentansprüche

1. Systemkomponenten-Einbindung bei einem Haus-Kommunikationssystem mit mindestens einer Türstation (16), mindestens einer Wohnungsstation (1, 6, 11), mindestens einem Türöffner / Schaltaktor (22) und optional einer Systemzentrale (27) als Systemkomponenten, wobei alle Systemkomponenten (1, 6, 11, 16, 22) an einen Bus (32) angeschlossen sind und eine Verknüpfung / Adressierung der Systemkomponenten des Haus-Kommunikationssystems mittels Kodierschalter erfolgt, **dadurch gekennzeichnet, dass** eine Kennzeichnung aller Systemkomponenten (1, 6, 11, 16, 22, 27) des Haus-Kommunikationssystems mit einem speziellen Schlüsselcode (s) erfolgt, welcher von einer Systemkomponente (27, 16) mittels einer Steuer-/Verarbeitungseinheit (28, 19) generierbar und in einem Speicher (29, 20) abspeicherbar sowie an die weiteren Systemkomponenten (1, 6, 11, 16, 22) weiterleitbar und dort ebenfalls in Speichern (4, 9, 14, 20, 25) abspeicherbar ist.

2. Systemkomponenten-Einbindung nach Anspruch 1, **dadurch gekennzeichnet, dass** eine Steuer-Nerarbeitungseinheit (28, 19) einer Systemkomponente (27, 16) einen Programmierknopf (30, 31) zur Initiierung einer erneuten Generierung und Übertragung eines neuen Schlüsselcodes (s) aufweist.

3. Systemkomponenten-Einbindung nach Anspruch 1, **dadurch gekennzeichnet, dass** eine Systemkomponente (27, 16) einen die Energieversorgung des Haus-Kommunikationssystems schaltenden Schalter aufweist, mit welchem gleichzeitig eine erneute Generierung und Übertragung eines neuen Schlüsselcodes (s) initiierbar ist.

4. Systemkomponenten-Einbindung nach Anspruch 1, **dadurch gekennzeichnet, dass** weitere Systemkomponenten (34, 39) im System vorhanden sind, die über einen eigenen Schlüsselcode (s1) sicher gepaart werden können.

## Claims

1. System component integration in a building communication system having at least one door station (16), at least one residence station (1, 6, 11), at least one door opener/switching actuator (22) and optionally a system centre (27) as system components, wherein all system components (1, 6, 11, 16, 22) are connected to a bus (32) and the system components of the building communication system are linked/addressed by means of coding switches, **characterized in that** all system components (1, 6, 11, 16, 22, 27) of the building communication system are identified by means of a special key code (s) which can be generated by a system component (27, 16) by means of a control/processing unit (28, 19) and stored in a memory (29, 20) and forwarded to the other system components (1, 6, 11, 16, 22) and can there also be stored in memories (4, 9, 14, 20, 25).

2. System component integration according to Claim 1, **characterized in that** a control/processing unit (28, 19) of a system component (27, 16) has a programming button (30, 31) for initiating a new generation and transmission of a new key code (s).

3. System component integration according to Claim 1, **characterized in that** a system component (27, 16) has a switch switching the power supply of the building communication system, by means of which a new generation and transmission of a new key code (s) can be contemporaneously initiated.

4. System component integration according to Claim 1, **characterized in that** there are further system components (34, 39) in the system which can be securely paired by means of their own key code (s1).

## Revendications

1. Ensemble de composants d'un système de communication domestique présentant comme composants du système :
au moins un poste de porte (16),
au moins un poste d'habitation (1, 6, 11),
au moins un dispositif d'ouverture de porte/actionneur de commutation (22) et facultativement
une centrale système (27),
tous les composants (1, 6, 11, 16, 22) du système étant raccordés à un bus (32) et une association/un adressage des composants du système de communication domestique s'effectuant au moyen de commutateurs de codage,
**caractérisé en ce que**
une caractérisation de tous les composants (1, 6, 11, 16, 22, 27) du système de communication domestique s'effectue à l'aide d'un code de clé spécial (s) qui peut être généré par un composant (27, 16) du système au moyen d'une unité (28, 19) de commande et de traitement et qui peut être conservé dans une mémoire (29, 20) et être transmis aux autres composants (1, 6, 11, 16, 22) du système où ils peuvent également être conservés dans des mémoires (4, 9, 14, 20, 25).

2. Ensemble de composants selon la revendication 1, **caractérisé en ce qu'**une unité de commande et de traitement (28, 19) d'un composant (27, 16) du système présente un bouton de programmation (30, 31) qui permet de lancer une nouvelle génération et un nouveau transfert d'un nouveau code de clé (s).

3. Ensemble de composants selon la revendication 1, **caractérisé en ce qu'**un composant (27, 16) du système présente un commutateur qui branche l'alimentation en énergie du système de communication domestique et qui permet en même temps de lancer une nouvelle génération et un nouveau transfert d'un nouveau code de clé (s).

4. Ensemble de composants selon la revendication 1, **caractérisé en ce que** d'autres composants (34, 39) sont prévus dans le système et peuvent être appariés de manière sécurisée par un code de clé (s1) propre.
